# EUROPEAN PATENT APPLICATION

(11) **EP 3 869 110 A1**
(43) Date of publication of application: **25.08.2021**
(21) Application number: 18937122.2
(22) Date of filing: 14.12.2018
(51) Int. Cl.: F24F 5/00, F24F 11/89, H02S 40/30, H02J 3/38

(54) **AIR-CONDITIONING DEVICE, AND ELECTRIC ENERGY PROCESSING METHOD FOR AIR-CONDITIONING DEVICE**

(30) Priority: 17.10.2018 CN 201811208120
(71) Applicant: Gree Electric Appliances, Inc. of Zhuhai, Zhuhai, Guangdong 519070 (CN)
(72) Inventor: LIU, Keqin, Zhuhai, Guangdong 519070 (CN); JIANG, Shiyong, Zhuhai, Guangdong 519070 (CN); WANG, Jing, Zhuhai, Guangdong 519070 (CN); WEN, Wu, Zhuhai, Guangdong 519070 (CN); ZHANG, Xuefen, Zhuhai, Guangdong 519070 (CN); REN, Peng, Zhuhai, Guangdong 519070 (CN)
(74) Representative: Lavoix
(86) International application number: PCT/CN2018/121190
(87) International publication number: WO 2020/077787

(57) **Abstract**

Disclosed is an air-conditioning device (10), comprising: a device module (12); and a power source port module (11) connected to the device module (12) and used for connecting to an open bus of an energy system (20) to provide, for the device module (12), electric energy output by the energy system (20) through the bus. Further disclosed is an electric energy processing method for the air-conditioning device (10).

## Description

### CROSS REFERENCE TO RELATED APPLICATIONS

This application is based on and claims the benefit of priority to the Chinese patent application No. 201811208120.5 filed on October 17, 2018, which is hereby incorporated by reference in its entirety into the present application.

### TECHNICAL FIELD

This disclosure relates to the technical field of electric equipment, and in particular, to an air-conditioning device and an electric energy processing method for the air-conditioning device.

### BACKGROUND

At present, with the evolution of traditional air conditioners to photovoltaic and DC ones, a pure DC air conditioner, a photovoltaic air conditioner and the like have become research hotspots . In current various design solutions, an air conditioner is designed as an independent system, and each air conditioner comprises a photovoltaic part, a current converting part, an energy storage part and an air conditioning part, which causes the air conditioner to have a complex structure, large volume and high cost, and causes function duplication with an energy system, waste in equipment cost, and is not beneficial to efficiency improvement.

### SUMMARY

One or more embodiments of the present disclosure provide an air-conditioning device and an electric energy processing method for the air-conditioning device, capable of providing an electric energy output by an energy system via a bus, to an equipment module through a power port module.

According to a first aspect of the present disclosure, there is provided an air-conditioning device comprising: an equipment module; and a power port module, connected to the equipment module, and configured to be connected to a bus opened by the energy system, for providing the equipment module with an electric energy output by the energy system via the bus.

In some embodiments, the air-conditioning device further comprises: a control module, connected to the equipment module and configured to control operation of the equipment module.

In some embodiments, the air-conditioning device further comprises: a communication port module, connected to the control module and configured to perform information interaction with the energy system.

In some embodiments, the communication port module is configured to transmit operation state information sent by the control module to the energy system, and to send a control strategy sent by the energy system to the control module, so that the control module controls the equipment module according to the control strategy.

In some embodiments, the communication port module comprises : a bus interface unit, a wireless interface unit, and an industrial Ethernet interface unit.

In some embodiments, the power port module comprises: a first DC power port unit, configured to be connected to a high-voltage DC bus opened by the energy system; and a second DC power port unit, configured to be connected to a low-voltage DC bus opened by the energy system.

In some embodiments, the equipment module comprises: a high-voltage equipment module and a low-voltage equipment module; the first DC power port unit is connected to the high-voltage equipment module, for providing the high-voltage equipment module with a high-voltage DC electric energy output by the energy system via the high-voltage DC bus; and the second DC power port unit is connected to the low-voltage equipment module, for providing the low-voltage equipment module with a low-voltage DC electric energy output by the energy system via the low-voltage DC bus.

In some embodiments, a rated operational voltage of the high-voltage equipment module is set as a rated voltage of the high-voltage DC bus; and a rated operational voltage of the low-voltage equipment module is set as a rated voltage of the low-voltage DC bus.

In some embodiments, the high-voltage equipment module comprises: a compressor; the low-voltage equipment module comprises: a fan; the control module comprises: a fan control unit, connected to the fan and configured to control operation of the fan according to the control strategy; and a compressor control unit, connected to the compressor and configured to control operation of the compressor according to the control strategy.

In some embodiments, the energy system comprises: an energy internet system.

In some embodiments, the energy internet system comprises: a power generation system; and the power generation system comprises: a photovoltaic power generation system.

According to a second aspect of the present disclosure, there is provided an electric energy processing method for an air-conditioning device, comprising: respectively connecting a bus opened by an energy system and an equipment module of the air-conditioning device through a power port module of the air-conditioning device; and controlling the power port module to provide the equipment module with an electric energy output by the energy system via the bus.

In some embodiments, the equipment module is connected through a control module of the air-conditioning device, to control operation of the equipment module.

In some embodiments, information interaction with the energy system is performed through a communication port module of the air-conditioning device; wherein the communication port module is connected to the control module and comprises: a bus interface unit, a wireless interface unit, and an industrial Ethernet interface unit .

In some embodiments, operation state information sent by the control module is transmitted to the energy system through the communication port module; and a control strategy sent by the energy system is sent to the control module through the communication port module, so that the control module controls the equipment module according to the control strategy.

In some embodiments, the power port module comprises: a first DC power port unit and a second DC power port unit; a high-voltage DC bus opened by the energy system being connected through the first DC power port unit; and a low-voltage DC bus opened by the energy system being connected through the second DC power port unit.

In some embodiments, the equipment module comprises: a high-voltage equipment module and a low-voltage equipment module; the high-voltage equipment module being connected through the first DC power port unit, for providing the high-voltage equipment module with a high-voltage DC electric energy output by the energy system via the high-voltage DC bus; and the low-voltage equipment module being connected through the second DC power port unit, for providing the low-voltage equipment module with a low-voltage DC electric energy output by the energy system via the low-voltage DC bus.

In some embodiments, a rated operational voltage of the high-voltage equipment module is set as a rated voltage of the high-voltage DC bus; and a rated operational voltage of the low-voltage equipment module is set as a rated voltage of the low-voltage DC bus.

In some embodiments, the high-voltage equipment module comprises: a compressor; the low-voltage equipment module comprises: a fan; the control module comprises: a fan control unit and a compressor control unit; the fan is connected through the fan control unit, so that the fan control unit controls operation of the fan according to the control strategy; and the compressor is connected with the compressor control unit, so that the compressor control unit controls operation of the compressor according to the control strategy.

With the use of the technical solutions of the present disclosure, by respectively connecting the bus provided by the energy system and the equipment module through the power port module, the power port module is controlled to provide the equipment module with the electric energy output by the energy system via the bus; the configuration of the air-conditioning device can be simplified and its volume is reduced; functionally overlapping with the energy system can be avoided, and equipment cost is reduced; power is supplied by connecting the bus provided by the energy system, without the need of extra electric energy conversion links, which avoids energy waste and improves whole machine efficiency.

### BRIEF DESCRIPTION OF THE DRAWINGS

In order to more clearly illustrate the embodiments of the present disclosure or technical solutions in related arts, the drawings used in the description of the embodiments or related arts will be briefly introduced below. Obviously, the drawings described below are only some embodiments of the present disclosure, and for those skilled in the art, other drawings can be obtained according to these drawings without creative efforts.
Fig. 1 is a block schematic diagram of an air-conditioning device according to some embodiments of the present disclosure;
Fig. 2 is a block schematic diagram of an air-conditioning device according to some other embodiments of the present disclosure;
Fig. 3 is a block schematic diagram of an air-conditioning device according to still other embodiments of the present disclosure;
Fig. 4 is a schematic flow diagram of an electric energy processing method for the air-conditioning device according to some embodiments of the present disclosure.

### DETAILED DESCRIPTION

The technical solutions in the embodiments of the present disclosure will be described clearly and completely with reference to the drawings in the embodiments of the present disclosure, and it is obvious that the embodiments described are only some of the embodiments of the present disclosure, rather than all embodiments. All other embodiments, which can be derived by one skilled in the art from the embodiments disclosed herein without making any creative effort, shall fall within the protection scope of the present disclosure.

The terms "first", "second", etc. are used hereinafter only for descriptive distinction and have no other special meanings.

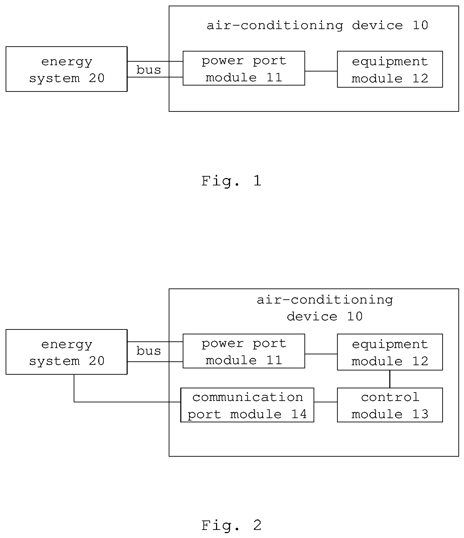

Fig. 1 is a block schematic diagram of an air-conditioning device according to some embodiments of the present disclosure, and as shown in Fig. 1, the present disclosure provides an air-conditioning device 10, comprising: a power port module 11 and an equipment module 12. The equipment module 12 may be a module of the air-conditioning device such as a compressor and a fan. The power port module 11 is connected to the equipment module 12, and a bus opened by an energy system 20 is connected through the power port module 11, for providing the equipment module 12 with an electric energy output by the energy system 20 via the bus.

The energy system can be various energy systems, such as an energy internet system. The energy internet system comprises a power generation system which can be a photovoltaic power generation system and the like. The bus opened by the energy system 20 may be a DC bus, etc., and various equipment may be connected to the bus provided by the energy system 20. If the bus opened by the energy system 20 is the DC bus, positive and negative electrodes of the power port module 11 are connected to the positive and negative ones of the DC bus, respectively.

With the development of the energy internet, the energy internet, as a system level, can implement functions such as photovoltaic power generation, energy storage control, rectification and inversion control, energy information centralized management; through efficient energy scheduling, can achieve effects such as photovoltaic power self-generation for self-use, energy storage balance for gaps between supply and demand, real-time grid connection for residual power, power grid supplement at any time; has links such as power generation, power storage, power transformation, power consumption, energy control and display interaction; and opens DC buses with different voltage levels for DC energy transmission, for the convenience of access by various equipment. In application occasions of the energy internet, the air-conditioning device only need to reflect typical properties of electric equipment, and if designed to have function modules such as photovoltaic power generation, energy storage, current transformation, the air-conditioning device will be functionally overlapped with the energy internet, which not only causes function waste, but also increases equipment cost.

In some embodiments, as shown in Fig. 2, the air-conditioning device 10 comprises: a control module 13 connected to the equipment module 12, for controlling the operation of the equipment module 12. The control module 13 may comprise a driving unit, a DC/DC circuit unit, etc., and implements functions of reducing and boosting voltage and driving the equipment module 12 to operate. The control module 13 may be powered by the electric energy output by the energy system 20 via the bus.

The air-conditioning device 10 may further comprise a commercial power interface module, for providing the equipment module 12 with an electric energy from a commercial power grid. The control module 13 may be connected to the commercial power interface module and the power port module 11, and the commercial power interface module may be connected to the equipment module 12. When the control module 13 judges that the electric energy output by the energy system 20 via the bus cannot meet the requirement of the equipment module 12 or the bus is abnormal, the power supply mode of the equipment module 12 is switched, and the commercial power interface module is controlled to provide the equipment module 12 with the electric energy from the commercial power grid.

The air-conditioning device 10 comprises: a communication port module 14, connected to the control module 14 and configured to perform information interaction with the energy system 20. The communication port module 14 may transmit operation state information sent by the control module 13 to the energy system 20, and the operation state information comprises operation state information of the equipment module 12, etc., and the operation state information of the equipment module 12 comprises information such as voltage, current, power, status.

The communication port module 14 transmits a control strategy sent by the energy system 20 to the control module 13, so that the control module 13 controls the equipment module 12 according to the control strategy. The control strategy can comprise mode switching strategies of modes such as power on, power off, refrigeration and heating, and logic control strategies such as up and down frequency conversion, etc.

The communication port module comprises : a bus interface unit, a wireless interface unit, an industrial Ethernet interface unit, etc. The communication port module can further comprise: one or two of the bus interface unit, wireless interface unit and industrial Ethernet interface unit. The bus interface unit may be a 485 bus interface unit, a CAN bus interface unit and the like. The wireless interface unit may be a Bluetooth interface unit or the like.

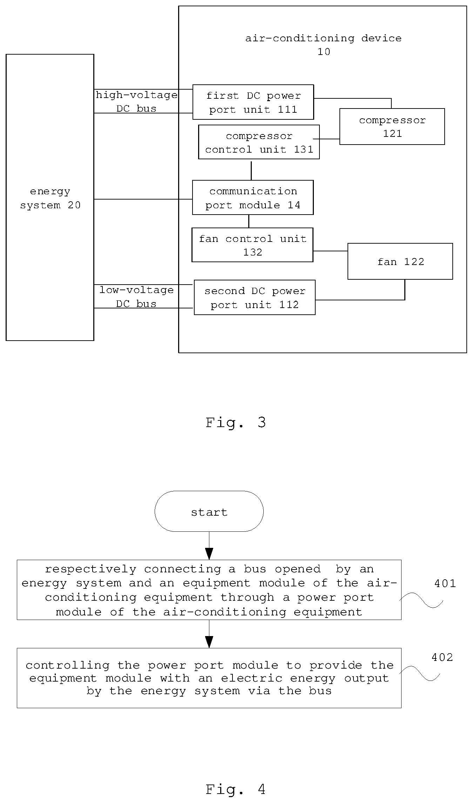

In some embodiments, the power port module can be arranged in various ways. As shown in Fig. 3, the power port module comprises a first DC power port unit 111 and a second DC power port unit 112. The first DC power source port unit 111 is connected to a high-voltage DC bus opened by the energy system 20, and the second DC power port unit 112 is connected to a low-voltage DC bus opened by the energy system.

The energy system 20 may comprise a power generation system, a converter system, an energy storage system, a control system, etc., and implement multi-energy complementary operation and energy exchange with the power grid. The energy system opens a high-voltage DC bus and low-voltage DC bus for external equipment to supply power for DC equipment. The high-voltage DC voltage on the high-voltage DC bus can be 400V and the like, and the low-voltage DC voltage on the low-voltage DC bus can be 48V and the like.

The equipment module comprises a high-voltage equipment module such as a compressor, and a low-voltage equipment module such as a fan. The first DC power port unit 111 is connected to the high-voltage equipment module, for providing the high-voltage equipment module with the high-voltage DC electric energy output by the energy system 20 via the high-voltage DC bus. The second DC power port unit 112 is connected to the low-voltage equipment module, for providing the low-voltage equipment module with the low-voltage DC electric energy output by the energy system via the low-voltage DC bus.

A rated operational voltage of the high-voltage equipment module can be set as a rated voltage of the high-voltage DC bus, and also be set according to specific conditions. A rated operational voltage of the low-voltage equipment module is set as a rated voltage of the low-voltage DC bus, and also be set according to specific conditions.

For example, the high-voltage equipment module is a compressor 121 and the low-voltage equipment module is a fan 122. The first DC power port unit 111 is connected to the compressor 121, for providing the compressor 121 with the high-voltage DC electric energy output by the energy system 20 via the high-voltage DC bus. The second DC power port unit 112 is connected to the fan 122, for providing the fan 122 with the low-voltage DC electric energy output by the energy system via the low-voltage DC bus. A fan control unit 132 is connected to the fan 122 for controlling the operation of the fan 122 according to a control strategy. A compressor control unit 131 is connected to the compressor for controlling the operation of the compressor 121 according to the control strategy.

The compressor 121 is a DC compressor, and a rated operational voltage of the compressor 121 is set as the rated voltage of the high-voltage DC bus. The compressor control unit 131 controls the operation of the compressor 121 according to the control strategy received by the communication port module 14, and controls the operation state of the compressor 121, which comprises start-stop, operation speed, operation frequency, and the like. In a whole operation process of the compressor 121, DC/DC and DC/AC conversion links can be omitted, which reduces energy waste and improves operation efficiency of the compressor.

The fan 122 is a DC fan, a rated operational voltage of the fan 122 is set as the rated voltage of the low-voltage DC bus, and the fan control unit 132 controls the operation of the fan 122 according to the control strategy received by the communication port module 14, and controls the operation state of the fan 122, which comprises start-stop, operation speed, operation frequency, and the like. In a whole operation process of the fan 122, DC/DC and DC/AC conversion links can be omitted, which reduces energy waste and improves operation efficiency of the fan.

The air-conditioning device 10 does not need complex functions such as power generation control, energy storage control, charge control, inversion control, which simplifies the system function design greatly, reduces the volume greatly, and decreases the cost greatly.

In some embodiments, when any one of the high-voltage DC bus and the low-voltage DC bus is abnormal, the control module may control the commercial power interface module to provide the equipment module with the electric energy from the commercial power grid, and replace the abnormal bus for power supply.

For example, the high-voltage DC bus is normal, the compressor 121 may be started normally, and operates normally when operating according to normal control logic. When the temperature of the compressor 121 rises, if the low-voltage DC bus is abnormal, the fan 122 cannot be started due to the abnormal low-voltage DC bus, which causes the compressor 121 to report an alarm message of over-temperature protection, and to stop running. When the low-voltage DC bus is abnormal, the fan control unit 132 controls the commercial power interface module to provide the fan 122 with the electric energy from the commercial power grid, which causes the fan 122 to operate normally, and then causes the compressor 121 to operate normally.

Fig. 4 is a schematic flow diagram of an electric energy processing method for the air-conditioning device according to some embodiments of the present disclosure, as shown in Fig. 4, comprising:
Step 401, respectively connecting a bus opened by an energy system and an equipment module of the air-conditioning device through a power port module of the air-conditioning device; and
Step 402, controlling the power port module to provide the equipment module with an electric energy output by the energy system via the bus.

In some embodiments, the equipment module is connected through a control module of the air-conditioning device, for controlling the operation of the equipment module. Information interaction with the energy system is performed through a communication port module of the air-conditioning device. The communication port module is connected to the control module and comprises: a bus interface unit, a wireless interface unit, an industrial Ethernet interface unit, etc.

Operation state information, sent by the control module, is transmitted to the energy system through the communication port module, and a control strategy, sent by the energy system, is sent to the control module through the communication port module, so that the control module controls the equipment module according to the control strategy.

In some embodiments, the power port module comprises: a first DC power port unit and a second DC power port unit, etc. A high-voltage DC bus opened by the energy system is connected through the first DC power port unit, and a low-voltage DC bus opened by the energy system is connected through the second DC power port unit.

The equipment module comprises a high-voltage equipment module and a low-voltage equipment module. The high-voltage equipment module is connected through the first DC power port unit, for providing the high-voltage equipment module with a high-voltage DC electric energy output by the energy system via the high-voltage DC bus. The low-voltage equipment module is connected through the second DC power port unit, for providing the low-voltage equipment module with a low-voltage DC electric energy output by the energy system via the low-voltage DC bus. A rated operational voltage of the high-voltage equipment module is set as a rated voltage of the high-voltage DC bus, and a rated operational voltage of the low-voltage equipment module is set as a rated voltage of the low-voltage DC bus.

In some embodiments, the high-voltage equipment module comprises: a compressor, etc., the low-voltage equipment module comprises: a fan, etc. The control module comprises a fan control unit and a compressor control unit. The fan is connected through the fan control unit so that the fan control unit controls the operation of the fan according to the control strategy. The compressor control unit is connected to the compressor, so that the compressor control unit controls the operation of the compressor according to the control strategy.

It can be seen from the foregoing description that, with the aid of the air-conditioning device and the electric energy processing method for the air-conditioning device according to the present disclosure, by respectively connecting the bus opened by the energy system and the equipment module through the power port module, the power port module is controlled to provide the equipment module with the electric energy output by the energy system via the bus; by simplifying the functions of the air-conditioning device, the configuration of the air-conditioning device can be simplified and its volume is reduced; when used in the energy system, functionally overlapping with the energy system can be avoided, and equipment cost is reduced; by connecting to the bus opened by the energy system, extra DC/AC and DC/DC conversion links are not needed, which avoids energy waste and improves whole machine efficiency. It will be apparent to those skilled in the art that various modifications and variations can be made to the embodiments of the present disclosure without departing from the spirit and scope of the present disclosure . Thus, it is intended that the present disclosure also encompass such modifications and variations as fall within the scope of the claims and their equivalents.

The method and system according to the present disclosure may be implemented in a number of ways . For example, the method and system according to the present disclosure may be implemented in software, hardware, firmware, or any combination of software, hardware, and firmware. The above-described order for the steps of the method is for illustration only, and the steps of the method according to the present disclosure are not limited to the order specifically described above unless specifically stated otherwise. Furthermore, in some embodiments, the present disclosure may also be embodied as programs recorded in a recording medium, and these programs comprise machine-readable instructions for implementing the method according to the present disclosure. Thus, the present disclosure also covers the recording medium storing the programs for executing the method according to the present disclosure.

The description of the present disclosure has been presented for purposes of illustration and description, and is not intended to be exhaustive or limited to the present disclosure in the form disclosed. Many modifications and variations will be apparent to those of ordinary skill in the art . The embodiments were chosen and described in order to best explain the principles and practical applications of the present disclosure, and to enable those of ordinary skill in the art to understand the present disclosure, thereby designing various embodiments with various modifications suitable for a particular use.

## Claims

1. An air-conditioning device, comprising:
an equipment module; and
a power port module, connected to the equipment module, and configured to be connected to a bus opened by an energy system, for providing the equipment module with an electric energy output by the energy system via the bus.

2. The air-conditioning device according to claim 1, further comprising:
a control module, connected to the equipment module and configured to control operation of the equipment module.

3. The air-conditioning device according to claim 2, further comprising:
a communication port module, connected to the control module and configured to perform information interaction with the energy system.

4. The air-conditioning device according to claim 3, wherein the communication port module is configured to transmit operation state information sent by the control module to the energy system, and to send a control strategy sent by the energy system to the control module, so that the control module controls the equipment module according to the control strategy.

5. The air-conditioning device according to claim 3, wherein the communication port module comprises: a bus interface unit, a wireless interface unit, and an industrial Ethernet interface unit .

6. The air-conditioning device according to claim 4, wherein the power port module comprises:
a first direct-current(DC) power port unit, configured to be connected to a high-voltage DC bus opened by the energy system; and
a second DC power port unit, configured to be connected to a low-voltage DC bus opened by the energy system.

7. The air-conditioning device according to claim 6, wherein:
the equipment module comprises a high-voltage equipment module and a low-voltage equipment module;
the first DC power port unit is connected to the high-voltage equipment module, for providing the high-voltage equipment module with a high-voltage DC electric energy output by the energy system via the high-voltage DC bus; and
the second DC power port unit is connected to the low-voltage equipment module, for providing the low-voltage equipment module with a low-voltage DC electric energy output by the energy system via the low-voltage DC bus.

8. The air-conditioning device according to claim 7, wherein:
a rated operational voltage of the high-voltage equipment module is set as a rated voltage of the high-voltage DC bus; and
a rated operational voltage of the low-voltage equipment module is set as a rated voltage of the low-voltage DC bus.

9. The air-conditioning device according to claim 7, wherein:
the high-voltage equipment module comprises a compressor;
the low-voltage equipment module comprises a fan; and
the control module comprises:
a fan control unit, connected to the fan and configured to control operation of the fan according to the control strategy; and
a compressor control unit, connected to the compressor and configured to control operation of the compressor according to the control strategy.

10. The air-conditioning device according to claim 1, wherein the energy system comprises an energy internet system.

11. The air-conditioning device according to claim 1, wherein:
the energy internet system comprises a power generation system; and
the power generation system comprises a photovoltaic power generation system.

12. An electric energy processing method for an air-conditioning device, comprising:
respectively connecting a bus opened by an energy system and an equipment module of the air-conditioning device through a power port module of the air-conditioning device; and
controlling the power port module to provide the equipment module with an electric energy output by the energy system via the bus.

13. The electric energy processing method according to claim 12, further comprising:
connecting with the equipment module through a control module of the air-conditioning device to control operation of the equipment module.

14. The electric energy processing method according to claim 13, further comprising:
performing information interaction with the energy system through a communication port module of the air-conditioning device;
wherein the communication port module is connected to the control module, and comprises: a bus interface unit, a wireless interface unit, and an industrial Ethernet interface unit.

15. The electric energy processing method according to claim 14, further comprising:
transmitting operation state information sent by the control module to the energy system through the communication port module; and
transmitting a control strategy sent by the energy system to the control module through the communication port module, so that the control module controls the equipment module according to the control strategy.

16. The electric energy processing method according to claim 15, wherein the power port module comprises: a first DC power port unit and a second DC power port unit; and the electric energy processing method further comprises:
connecting a high-voltage DC bus opened by the energy system through the first DC power port unit; and
connecting a low-voltage DC bus opened by the energy system through the second DC power port unit.

17. The electric energy processing method according to claim 16, wherein the equipment module comprises: a high-voltage equipment module and a low-voltage equipment module; and the electric energy processing method further comprises:
connecting the high-voltage equipment module through the first DC power port unit, for providing the high-voltage equipment module with a high-voltage DC electric energy output by the energy system via the high-voltage DC bus; and
connecting the low-voltage equipment module through the second DC power port unit, for providing the low-voltage equipment module with a low-voltage DC electric energy output by the energy system via the low-voltage DC bus.

18. The electric energy processing method according to claim 17, further comprising:
setting a rated operational voltage of the high-voltage equipment module as a rated voltage of the high-voltage DC bus; and
setting a rated operational voltage of the low-voltage equipment module as a rated voltage of the low-voltage DC bus.

19. The electric energy processing method according to claim 18, wherein the high-voltage equipment module comprises: a compressor; the low-voltage equipment module comprises: a fan; the control module comprises: a fan control unit and a compressor control unit; and the electric energy processing method further comprises:
connecting the fan through the fan control unit, so that the fan control unit controls operation of the fan according to the control strategy; and
connecting the compressor through the compressor control unit, so that the compressor control unit controls operation of the compressor according to the control strategy.
